Europäisches Patentamt

European Patent Office

Office européen des brevets

(19)

(11) Veröffentlichungsnummer: **0 473 034 A1**

## (12) EUROPÄISCHE PATENTANMELDUNG

(21) Anmeldenummer: **91113814.7**

(22) Anmeldetag: **17.08.91**

(51) Int. Cl.5: **C09D 177/00**, C09D 177/02,
C09D 177/06, C08L 77/00,
C08L 77/02, C08L 77/06

(30) Priorität: **30.08.90 DE 4027374**

(43) Veröffentlichungstag der Anmeldung:
**04.03.92 Patentblatt 92/10**

(84) Benannte Vertragsstaaten:
**DE FR GB IT**

(71) Anmelder: **BAYER AG**

**W-5090 Leverkusen 1 Bayerwerk(DE)**

(72) Erfinder: **Heinz, Hans-Detlef, Dr.**
**Breslauerstrasse 31**
**W-4150 Krefeld 1(DE)**
Erfinder: **Dhein, Rolf, Dr.**
**Deswatinesstrasse 30**
**W-4150 Krefeld(DE)**
Erfinder: **Stahlke, Kurt-Rainer, Dr.**
**Amselweg 20**
**W-5067 Kürten 2(DE)**

(54) **Polyamide mit verbesserter Fliessfähigkeit.**

(57) Die Erfindung betrifft Polyamidformmassen mit erhöhter Fließfähigkeit, gekennzeichnet durch einen Gehalt an speziellen Lackhilfsmitteln bzw. spezieller Harze, welche in der Lack- bzw. Überzugsmittelindustrie Verwendung finden.

Weiterhin wird ein Verfahren zur Herstellung der erfindungsgemäßen Polyamid-Formmassen sowie die Verwendung der erfindungsgemäßen Formmassen zur Herstellung von Formkörpern, Folien, Fasern, Halbzeugen, Verbundwerkstoffen und anderen Gegenständen beansprucht.

EP 0 473 034 A1

Die Erfindung betrifft Polyamidformmassen mit erhöhter Fließfähigkeit, gekennzeichnet durch einen Gehalt an speziellen Lackhilfsmitteln bzw. spezieller Harze, welche in der Lack- bzw. Überzugsmittelindustrie Verwendung finden.

Weiterhin wird ein Verfahren zur Herstellung der erfindungsgemäßen Polyamid-Formmassen sowie die Verwendung der erfindungsgemäßen Formmassen zur Herstellung von Formkörpern, Folien, Fasern, Halbzeugen, Verbundwerkstoffen und anderen Gegenständen beansprucht.

Die Fließfähigkeit von Polyamid-Formmassen ist von großer Bedeutung für die Herstellung von Fertigteilen. Generell ist i.a. eine möglichst hohe Fließfähigkeit erwünscht, um Formen rasch bzw. auch komplizierte Formen füllen zu können bzw. Formteile mit geringen Wandstärken herstellen zu können. Üblicherweise besitzen Polyamidformmassen eine gute Fließfähigkeit, jedoch kann, je nach Molekulargewicht und evtl. anwesender Zusatzstoffe (z.B. Füll-/Verstärkungsmittel, polymere Legierungspartner u.a.m.), ihre Schmelzviskosität für manche Anwendungen zu hoch sein.

Überraschend wurden nun sehr wirksame Fließhilfen für Polyamide gefunden, nämlich spezielle Lackhilfsharze, bevorzugt solche auf Kolophonium- bzw. Abietinsäure(bzw. ihrer Derivate und/oder Folgeprodukte wie beispielsweise Ester, Amide u.a.m., disproportionierte bzw. gehärtete Abietinsäuren, isomerisierte Abietinsäuren (beispielsweise Laevopimarsäure), zu Alkoholen hydrierte Abietinsäuren, Maleinsäureanhydrid modifizierte Abietin- bzw. Laevopimarsäure, dimerisierte, oligomerisierte und polymerisierte Abietin- bzw. Laevopimarsäure u.a.m.)-Basis, wie sie im Rahmen der Erfindung allgemein unter den Namen "Rosins", "Rosin-Maleinsäureanhydrid-Harz", "Rosinalkohole" u.a.m. verstanden werden sollen, (Cyclo)alkanharze sowie auf Basis von Kondensationsprodukten aus Aldehyden wie Formaldehyd und Kohlenwasserstoffen wie beispielsweise Xylol, Ketonen wie Cyclohexanon sowie Kohlenwasserstoffen und Phenolen wie t-Butylphenol.

Gegenstand der Erfindung sind daher Formmassen aus

A) 70 bis 99,5 Gew.-% aliphatischer, thermoplastischer Polyamide,

B) 0,5 bis 30 Gew.-% an Lackhilfsharzen, wie sie zur Modifizierung von Alkydharzen bzw. Nitrocelluloselacken eingesetzt werden, bevorzugt auf Basis von (gegebenenfalls modifizierten bzw. deren Nachfolgeprodukten) Kolophoniumharzen (Abietinsäure, Laevopimarsäure und verwandte Säuren, deren Ester und Amide, Reaktionsprodukte mit ungesättigten Säuren, insbesondere Maleinsäureanhydrid, Alkylierungs- und Arylierungsprodukte (z.B. mit Phenol), Di-, Oligo- und Polymerisationsprodukte solcher Säuren bzw. ihrer Derivate, gehärtete Abietin- und Laevopimarsäure(derivate), Reduktionsprodukte derselben wie Alkohole u.a.m.) bzw. (Cyclo)alkanharzen bzw. Kondensaten aus Aldehyden wie Formaldehyd und Kohlenwasserstoffen wie Xylol(en), Ketonen wie Cyclohexanon sowie Kohlenwasserstoffen und Phenolen, insbesondere t-Butylphenol,
sowie gegebenenfalls

C) bis 150 Gew.-%, bevorzugt 0,01 bis 100 Gew.-%, bezogen auf A) und B), weiterer Zusatzstoffe.

Als Polyamide A) sind beispielsweise und bevorzugt geeignet:
PA6, 66, 610, 69, 46, 11, 12, 1212, 6/66-Copolyamide, Copolyamide auf Basis von Terephthalsäure, Hexamethylendiamin und Caprolactam oder Adipinsäure und andere Copolyamide auf Basis PA6 oder 66 oder Mischungen der genannten Polyamide.

Generell werden im Rahmen der Erfindung alle thermoplastischen Polyamide, welche aliphatische Kohlenwasserstoffgruppen in der Hauptkette enthalten, als unter dem Namen "aliphatische Polyamide" enthalten verstanden.

Besonders bevorzugt sind PA6, 66 sowie Mischungen von oder Copolyamide auf Basis PA6 bzw. 66.

Als Zusatzstoffe C) sind beispielsweise geeignet: Füllstoffe bzw. Verstärkungsstoffe (Glasfasern, Glaskugeln, Kohlenstoffasern, Aramidfasern, mineralische Füllstoffe u.a.m.), UV-Stabilisatoren, Lichtstabilisatoren, Antioxidantien, polymere Legierungspartner, Pigmente, Farbstoffe, Nukleierungsmittel, Kristallisationsbeschleuniger- bzw. Verzögerer, Fließhilfsmittel, Gleitmittel, Entformungsmittel, Flammschutzmittel, die Wasseraufnahme reduzierende Stoffe (bevorzugt auf Basis von Phenolen und Novolaken) u.a.m., wie sie im Stand der Technik beschrieben sind.

Als polymere Legierungspartner kommen z.B. in Betracht: Dienkautschuke, Acrylat-Kautschuke, Polyethylene, Polypropylene, Ethylen-Propylen-Copolymere, Ethylen-1-Buten-Copolymere, Ethylen-Propylen-Dien-Terpolymere, Ethylen-Acrylsäure(Maleinsäureanhydrid)/Acrylester-Terpolymere, Ethylen-Vinylacetat-Copolymere, Polyoctenylene, Polystyrole, ($\alpha$-Methyl)Styrol-(Meth)acrylnitrilcopolymere, (Meth)Acrylnitril-Butadien-($\alpha$-Methyl)Styrol-Polymere (ABS), schlagzähe Polystyrole, Polycarbonate, aromatische Polyester-(carbonate), Polyester wie z.B. Polyethylenterephthalat, Polysulfone, Polyphenylenoxide, Polyetherketone, Polyetheretherketone, Polyamidimide, Polyarylensulfide, Polyethersulfone, Polyetherimide, Polyesterimide und Polyimide, wie sie im Stand der Technik als Legierungspartner bzw. Modifikatoren bekannt sind.

Die polymeren Legierungspartner sollten, wenn nötig, gegebenenfalls zumindest teilweise, chemisch so modifiziert sein, daß eine partielle Ankopplung der beiden Phasen erfolgen kann. Möglichkeiten hierzu sind im Stand der Technik beschrieben und grundsätzlich bekannt (z.B. über Carbonsäure- oder Carbonsäureanhydridgruppen oder Carbonsäure-(t.-alkyl)ester oder Aminogruppen).

Auch mit den erfindungsgemäß einzusetzenden Polyamiden verträgliche und/oder unverträgliche amorphe Polyamide können als Zusatzstoff eingesetzt werden, z.B. Polyamide aus Isophthalsäure, Terephthalsäure, Hexamethylendiamin und gegebenenfalls 4,4'-Diaminodicyclohexylmethan, oder auch PA6I (Polyhexamethylenisophthalamid).

Bevorzugte Legierungspartner sind solche, die üblicherweise zur Erhöhung der Kälte- und/oder Trokkenschlagzähigkeit eingesetzt werden (Schlagzähmodifikatoren).

Geeignete Lackhilfsmittel B) sind solche, wie sie zur Herstellung bzw. Modifizierung von Alkydharzen bzw. Nitrocelluloselacken eingesetzt werden. Hierbei handelt es sich bevorzugt einerseits um Substanzen auf Kolophoniumbasis ("Rosins", "Rosinalkohole", "Rosin-Maleinsäureanhydrid-Harze (Maleic-Rosin) u.a.m.), die i.a. als Hauptkomponente Abietinsäure enthalten. Erfindungsgemäß sind aber nicht nur solche Rosins, sondern auch solche, wie sie durch Modifizierung des Kolophoniums bzw. der Abietinsäure erhältlich sind, beispielsweise durch Destillation (Raffinierung) oder auch durch chemische Prozesse wie

Veresterung, Amidierung, Umsetzung mit ungesättigten Säure(anhydride)n, Di-, Oligo- und Polymerisation, Hydrierung, Isomerisierung (beispielsweise zu Laevopimarsäure), Alkylierung und Arylierung (z.B. mit Phenol) und andere mehr, geeignet. Die zweite Gruppe der erfindungsgemäß einzusetzenden Lackhilfsharze umfaßt bevorzugt (Cyclo)alkanharze und Kondensationsprodukte aus Aldehyden, bevorzugt Formaldehyd, und Kohlenwasserstoffen, bevorzugt Xylolen, oder Ketonen wie Cyclohexanon, oder auch Kohlenwasserstoffen und Phenolen wie Xylolen und Phenol oder t-Butylphenol. Letztere gemischte Kohlenwasserstoff-Phenol-Aldehydharze können statistisch oder blockartig aufgebaut sein. Blockartige Harze lassen sich beispielsweise durch Kondensation von Formaldehyd und t-Butylphenol bei Anwesenheit eines Xylol-Formaldehydharzes erhalten.

Die Harze besitzen bevorzugt Erweichungspunkte nach Ring und Ball von mindestens 65 °C, besonders bevorzugt mindestens 70 °C und insbesondere bevorzugt mindestens 75 °C, und Säure- bzw. Hydroxylzahlen (auch durch phenolische Hydroxylgruppen) im Bereich von 0 bis 1000, besonders bevorzugt 0 bis 700, und insbesondere bevorzugt 0 bis 600.

Erfindungsgemäß einzusetzende Harze B) sind bekannt und in großer Zahl kommerziell erhältlich, beispielsweise unter den Namen "Kunstharz AFS", "Kunstharz XF", "Tungophen B", "Staybelite Resin", "Dymerex Resin", "Poly-pale Resin", "Limed Poly-pale Resin", "WW Wood Rosin", "WG Wood Rosin", "M Wodd Rosin", "Abitol", "Escorez" und anderen mehr.

Die Additive B) werden bevorzugt zu 1 bis 25, besonders bevorzugt 4 bis 20 und insbesondere bevorzugt zu 5 bis 15 Gew.-%, bezogen auf A + B), eingesetzt.

Die Formmassen der Erfindung werden durch Mischen der Komponenten A) bis C), gegebenenfalls als Konzentrate, gegebenenfalls in mehreren Schritten, in der Schmelze, bevorzugt in Extrudern oder Knetern, hergestellt.

Die Formmassen der Erfindung weisen bei sonst im wesentlichen vergleichbarem Eigenschaftsbild eine stark verbesserte Fließfähigkeit auf. Zusätzlich kann gegebenenfalls die Kristallisationsgeschwindigkeit verringert sein, was sich in verbesserten Oberflächen von Formteilen äußern kann. Weiterhin kann auch die Wasseraufnahme reduziert und die Dimensionsstabilität erhöht sein.

Die Formmassen der Erfindung eignen sich zur Herstellung von Formkörpern, Folien, Fasern, Halbzeugen und Verbundwerkstoffen, nach beispielsweise Verfahren des Spritzgusses, der Extrusion, der Pultrusion und anderen mehr. Sie sind eine wertvolle Ergänzung des Standes der Technik.

Die nachfolgenden Beispiele erläutern die Erfindung, ohne sie darauf einzuschränken. Insbesondere charakterisieren die Einzelbeispiele auch daraus zu bildende Bereiche bzw. Stoffgruppen.

Beispiele

Harz 1: Kondensationsprodukt aus Cyclohexanon und Formaldehyd; Erweichungspunkt (DIN 53 180): 75 bis 100 °C

Harz 2: Kondensationsharz aus Xylolformaldehydharz, t-Butylphenol und Formaldehyd; Erweichungspunkt: ca. 110 bis 120 °C; Säurezahl (DIN 53 402): 10 bis 20

Harz 3: Hydriertes Rosin auf Kolophoniumbasis; Erweichungspunkt (Ring und Ball): 68 °C; Säurezahl: 164.

Harz 4: Petroleum-Kohlenwasserstoffharz, Molekulargewicht 800-2000 g mol$^{-1}$ (Escorez® 1102; ein Produkt der Deutsche Exxon Chemical GmbH)

Harz 5: Aliphatisch-cyclisch verbessertes Harz, Molekulargewicht 1040 g mol$^{-1}$ (Escorez® 1401; ein

Produkt der Deutsche Exxon Chemical GmbH)

Harz 6: Copolymerharz aus Olefinen und Diolefinen, Molekulargewicht 700 g mol$^{-1}$ (Escorez® 4401; ein Produkt der Deutsche Exxon Chemical GmbH)

Harz 7: Thermoplastisches hydriertes Harz, Molekulargewicht 500-600 g mol$^{-1}$ (Escorez® 5340; ein Produkt der Deutsche Exxon Chemical GmbH).

Beispiele 1 bis 3

PA6 ($\eta_{rel}$ = 3,5; 1 % im m-Kresol, 25°C) wurde mit je 10 Gew.-% der Harze 1 bis 3 über einen ZSK 30-Zweiwellenextruder bei 12 kg/h Durchsatz extrudiert.

Die Drehmomentwerte des Extruders (Maß für die Fließfähigkeit; geringere Werte bedeuten bessere Fließfähigkeit) sowie $\eta_{rel}$-Werte sind in Tabelle 1 zusammengestellt.

Vergleichsbeispiel 1

In der selben Weise wurde das reine PA6 extrudiert (Tabelle 1).

## Tabelle 1

| Beispiel | Harz | D/T[1] (%) (°C) | $\eta_{rel}$[2] |
|----------|------|-----------------|-----------------|
| 1        | 1    | 50 / 280        | 3,39            |
| 2        | 2    | 21 / 275        | 3,26            |
| 3        | 3    | 36 / 277        | 3,22            |
| Vgl. 1   | -    | 70 / 280        | 3,37            |

1) Drehmoment (%) bei T (°C)

2) 1 % in m-Kresol, 25°C

Wie die Beispiele zeigen, wird die Fließfähigkeit durch die Harze deutlich verbessert (s. auch Tabelle 3).

Die Wasseraufnahme wurde durch Lagerung von 80·10·4 (mm·mm·mm) Stäben bei 60°C bestimmt (Tabelle 2).

4

## Tabelle 2

| Beispiel | Harz | H$_2$O-Aufnahme [%] nach [Tagen] | |
|---|---|---|---|
| | | 1 | 4 |
| 1 | 1 | 5,0 | 6,6 |
| 2 | 2 | 4,2 | 5,7 |
| 3 | 3 | 4,1 | 5,4 |
| Vergl. 1 | - | 5,5 | 7,4 |

Beispiele 4 - 7

Wie für die Beispiele 1 - 3 beschrieben, wurde ein Polyamid 6 ($\eta_{rel} \cong 3,0$) mit je 10 Gew.-% der Harze 4-7 compoundiert.

Die Drehmomentwerte des Extruders finden sich in Tabelle 3.

Vergleichsbeispiel 2

In der selben Weise wurde das reine PA6 ohne Additiv compoundiert.

## Tabelle 2

| Beispiel | Harz | D/T[1] (%) ($^0$C) | |
|---|---|---|---|
| 4 | 4 | 30 / 275 | |
| 5 | 5 | 14 / 274 | |
| 6 | 6 | 19 / 274 | |
| 7 | 7 | 22 / 264 | |
| Vgl. 2 | - | 36 / 276 | |

[1] Erläuterung s. Tabelle 1

Patentansprüche

1. Thermoplastische Formmassen aus
   A) 70 bis 99,5 Gew.-% thermoplastischer aliphatischer Polyamide,
   B) 0,5 bis 30 Gew.-% Lackhilfsharzen zur Herstellung bzw. Modifizierung von Alkydharzen bzw. Nitrocelluloselacken
   sowie gegebenenfalls
   C) bis 150 Gew.-%, bezogen auf A) + B), weiterer üblicher Zusatzstoffe.

**2.** Formmassen nach Anspruch 1, dadurch gekennzeichnet, daß als Lackhilfsharze Harze auf Kolophonium- bzw. Abietinsäure- bzw. derer Derivate-Basis bzw. auf Basis von durch chemische Reaktionen (beispielsweise Di-, Oligo- und Polymerisation, Härtung, Hydrierung zu Alkoholen, Umsetzung mit ungesättigten Säure(anhydride)n, Isomerisierungen, Alkylierung und Arylierung dieser Harze gewonnene Harze und/oder (Cyclo)alkanharze bzw. Kondensate aus Aldehyden und Kohlenwasserstoffen oder Ketonen oder Kohlenwasserstoffen und Phenolen, wobei letztere Harze blockartig oder statistisch aufgebaut sein können, eingesetzt werden, wobei die Harze bevorzugt Erweichungspunkte (nach Ring und Ball) von mindestens 65 °C und Säure-bzw. Hydroxylzahlen im Bereich von 0 bis 1000 besitzen.

**3.** Formmassen nach Anspruch 1, enthaltend 4 bis 20 Gew.-% der Lackhilfsharze.

**4.** Formmassen nach Anspruch 1, enthaltend als Polyamide PA6, 66, 69, 610, 46, 11, 12, 1212, 6/66-Copolyamide, Copolyamide auf Basis Hexamethylendiamin/Terephthalsäure und Adipinsäure oder Caprolactam.

**5.** Formmassen nach Anspruch 1, enthaltend als Zusatzstoffe in Mengen von 0,01 bis 100 Gew.- %, bezogen auf A + B), Füll-/Verstärkungsstoffe wie Glasfasern, Glaskugeln, Kohlenstoffasern, Aramidfasern und mineralische Füllstoffe, polymere Legierungspartner wie Schlagzähmodifikatoren, UV-Stabilisatoren, Antioxidantien, Pigmente, Farbstoffe, Nukleierungsmittel, Kristallisationsbeschleuniger- bzw. -verzögerer, Fließhilfsmittel, Gleitmittel, Entformungsmittel, Flammschutzmittel und die Wasseraufnahme reduzierende Stoffe, bevorzugt auf Basis von Phenolen und Novolaken.

**6.** Verfahren zur Herstellung der Formmassen nach Anspruch 1, dadurch gekennzeichnet, daß die Komponenten A) bis C) in einem oder in mehreren Schritten, als reine Stoffe oder als Konzentrate, in der Schmelze miteinander vermischt werden.

**7.** Verwendung der Formmassen nach Ansprüchen 1 bis 5 zur Herstellung von Formteilen, Folien, Fasern, Halbzeugen, Verbundwerkstoffen (Composites) und anderen Gegenständen nach Verfahren des Spritzgußes, der Extrusion und der Pultrusion und anderen mehr.

**8.** Formkörper, Folien, Fasern, Halbzeuge und Verbundwerkstoff(teil)e aus Formmassen nach Ansprüchen 1 bis 5.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN, Band 6, Nr. 223 (C-133), 9. November 1982; & JP-A-57 126 866 (PENTEL) 06-08-1982 — — — | 1-8 | C 09 D 177/00 C 09 D 177/02 C 09 D 177/06 C 08 L 77/00 |
| X | PATENT ABSTRACTS OF JAPAN, Band 4, Nr. 89 (C-016), 25. Juni 1980; & JP-A-55 054 374 (SUMITOMO BAKELITE) 21-04-1980 — — — | 1-8 | C 08 L 77/02 C 08 L 77/06 |
| X | CHEMICAL ABSTRACTS, Band 80, Nr. 8, 25. Februar 1974, Seiten 80-81, Zusammenfassung Nr. 38489f, Columbus, Ohio, US; & JP-A-73 01 225 (TORAY INDUSTRIES, INC. et al.) 16-01-1973 — — — | 1-8 | |
| X | DE-B-1 249 736 (SIGNODE CORP.) * Ansprüche * — — — — — | | |

**RECHERCHIERTE SACHGEBIETE (Int. Cl.5)**

C 09 D
C 08 L

Der vorliegende Recherchenbericht wurde für alle Patentansprüche erstellt

| Recherchenort | Abschlußdatum der Recherche | Prüfer |
|---|---|---|
| Den Haag | 28 November 91 | LEROY ALAIN |